# EUROPÄISCHE PATENTSCHRIFT

(11) **EP 2 504 089 B1**
(45) Veröffentlichungstag und Bekanntmachung des Hinweises auf die Patenterteilung: **20.11.2013**
(21) Anmeldenummer: 10798478.3
(22) Anmeldetag: 04.11.2010
(51) Int. Cl.: B01F 13/00, B01F 3/04, A01C 3/02, C05F 3/06, B01F 7/00

(54) **VORRICHTUNG UND VERFAHREN ZUM HOMOGENISIEREN VON IN EINER GÜLLEGRUBE BEFINDLICHER GÜLLE**
DEVICE AND METHOD FOR HOMOGENIZING LIQUID MANURE SITUATED IN A CESSPIT
DISPOSITIF ET PROCEDE D'HOMOGÉNÉISATION DE PURIN SE TROUVANT DANS UNE FOSSE À PURIN

(30) Priorität: 25.11.2009 DE 102009055773
(43) Veröffentlichungstag der Anmeldung: 03.10.2012
(73) Patentinhaber: Von Briel, Uwe, 34454 Bad Arolsen (DE)
(72) Erfinder: Von Briel, Uwe, 34454 Bad Arolsen (DE)
(74) Vertreter: Walther, Robert
(86) Internationale Anmeldenummer: PCT/DE2010/001287
(87) Internationale Veröffentlichungsnummer: WO 2011/063782

(56) Entgegenhaltungen:
- DE-A1- 3 925 053
- DE-A1- 10 109 039
- US-A- 4 190 619
- US-A- 5 330 639
- US-A1- 2002 190 401

## Beschreibung

Die vorliegende Erfindung betrifft eine Vorrichtung zum Homogenisieren von in einer Güllegrube befindlicher Gülle gemäß dem Oberbegriff des Anspruches 1 und ein Verfahren hierzu gemäß dem Oberbegriff des Anspruches 11.

Die im Rahmen eines landwirtschaftlichen Betriebes anfallende Gülle wird in einer Güllegrube gesammelt und dort bis zur weiteren Verwendung gelagert. Gegebenenfalls kann die Gülle in dieser Güllegrube auch aufgearbeitet werden. Dabei kommt es vor, dass einzelne Bestandteile der Gülle sich auf Grund der Schwerkraft am Boden absetzen und dass andere, schwimmende Teile aufsteigen und sich an der Oberfläche sammeln. Zur weiteren Nutzung der Gülle, insbesondere zur Ausbringung auf die Felder, wäre es aber wünschenswert, eine homogene Gülle zur Verfügung zu haben.

Aus der DE 43 19 864 A1 ist eine Vorrichtung zur Aufbereitung der Gülle bekannt, mittels der die Gülle mit Sauerstoff angereichert wird. Diese Vorrichtung umfasst einen in die Gülle eintauchenden Propeller, mit dem die gesamte Vorrichtung innerhalb der Güllegrube bewegt wird. Dabei wird über eine spezielle Sauerstoffzufuhrvorrichtung Sauerstoff in die Gülle eingeführt, der über den Propeller verteilt und der Gülle zugeführt wird. Bei dieser Gelegenheit findet auch eine teilweise Homogenisierung der Gülle statt.
Eine weitere Vorrichtung ist aus der US-A-5330639 bekannt.

Davon ausgehend liegt der vorliegenden Erfindung die Aufgabe zu Grunde, eine Vorrichtung und ein Verfahren der eingangs genannten Art zu schaffen, die die Gülle in kostengünstiger Weise eine zu einem hohen Grad homogenisiert.

Als technische Lösung dieser Aufgabe wird erfindungsgemäß eine Vorrichtung mit den Merkmalen des Anspruches 1 und ein Verfahren mit den Merkmalen des Anspruches 11 vorgeschlagen. Vorteilhafte Weiterbildungen dieser Vorrichtung und dieses Verfahrens sind den jeweiligen Unteransprüchen zu entnehmen.

Eine nach dieser technischen Lehre ausgebildete Vorrichtung und ein nach dieser technischen Lehre ausgeführtes Verfahren haben den Vorteil, dass die Rührschrauben die Gülle quer zur Bewegungsrichtung des Pontons bewegen, mit der Folge, dass sich der durch die Rührschraube erzeugte Güllestrahl rechts und links des Pontons ausbreitet und dort eine gute Homogenisierung der Gülle bewirkt. Durch die Sogwirkung wird dabei Gülle aus dem Bereich des Pontons und auch aus Schichten unterhalb des Pontons angesaugt.

Somit wird bei jedem Durchgang des Pontons durch das Güllebecken nicht nur der Bereich unmittelbar am und unterhalb des Ponton homogenisiert, vielmehr wird auch ein Breiter Streifen rechts und links des Pontons homogenisiert. Dies führt im Ergebnis zu einer sehr viel schnelleren und gründlicheren Homogenisierung der Gülle im Güllebecken.

In einer bevorzugten Ausführungsform sind die Rührschrauben gegenläufig angeordnet. Dies hat den Vorteil, dass die eine Rührschraube die Gülle in Fahrtrichtung gesehen nach rechts und die andere die Gülle nach links transportiert. Hierdurch wird der Raum rechts und links neben dem Ponton zum Vermischen genutzt, was zu einer erhöhten Homogenität beiträgt.

Ein weiteren Vorteil besteht darin, dass durch die gegenläufige Anordnung der der Rührschraube eigene Radeffekt kompensiert wird, so dass die auf die Führung des Pontons wirkenden Kräfte minimiert werden.

In einer weiteren, bevorzugten Ausführungsform sind die Rotationsachsen im Wesentlichen horizontal ausgerichtet. Dies hat den Vorteil, dass die von den Rührschrauben bewegte Gülle möglichst weit in den Raum des Güllebeckens bewegt wird, um eine gute Homogenisierung zu erreichen.

In einer bevorzugten Weiterbildung sind die Rührwerke höhenverstellbar am Ponton gehalten. Hierdurch ist es möglich, die Homogenisierung der Gülle im Güllebecken in verschiedenen Niveaus durchzuführen, was zu einer weiteren Verbesserung der Homogenisierung beiträgt.

In einer bevorzugten Ausführungsform sind die Rührschrauben so angeordnet, dass deren Rotationsachsen miteinander fluchten. Dies hat den Vorteil, dass die durch das Rührwerk auf das Ponton wirkenden Kräfte in derselben Ebene liegen und sich gegenseitig aufheben. Somit sind die auf den Ponton und die Führung des Pontons wirkenden Kräfte minimiert.

In einer anderen, bevorzugten Ausführungsform ist der Ponton über eine Führung in seiner Bewegungsrichtung geführt. Hierdurch ist es möglich, den Ponton gezielt auf einer vorbestimmten Bahn durch das Güllebecken zu bewegen. Dabei ist es ausreichend, wenn diese Führung im Wesentlichen in der Mitte des Güllebeckens angeordnet ist, da durch die orthogonale Anordnung der Rührschrauben die Gülle bis weit in das Becken hinein bewegt und somit homogenisiert wird.

In einer anderen, besonders bevorzugten Ausführungsform ist eine Rührschraube um eine Hochachse schwenkbar. Dabei ist es ausreichend, dass die Rührschraube um wenige Winkelgrade, beispielsweise bis zu 15°, schwenkbar ist. Somit wirken auf den Ponton nicht nur Querkräfte, sondern auch eine Kraftkomponente in Bewegungsrichtung mit der Folge, dass das Ponton über die Rührschrauben fortbewegt werden kann.

Weitere Vorteile der erfindungsgemäßen Vorrichtung und des erfindungsgemäßen Verfahrens ergeben sich aus der beigefügten Zeichnung und den nachstehend beschriebenen Ausführungsformen. Ebenso können die vorstehend genannten und die noch weiter ausgeführten Merkmale erfindungsgemäß jeweils einzeln oder in beliebigen Kombinationen miteinander verwendet werden. Die erwähnten Ausführungsformen sind nicht als abschließende Aufzählung zu verstehen, sondern haben vielmehr beispielhaften Charakter. Es zeigen:

Fig. 1 eine Draufsicht auf eine erfindungsgemäße Vorrichtung;

Fig. 2eine perspektivische Ansicht der Vorrichtung gemäß Fig. 1.

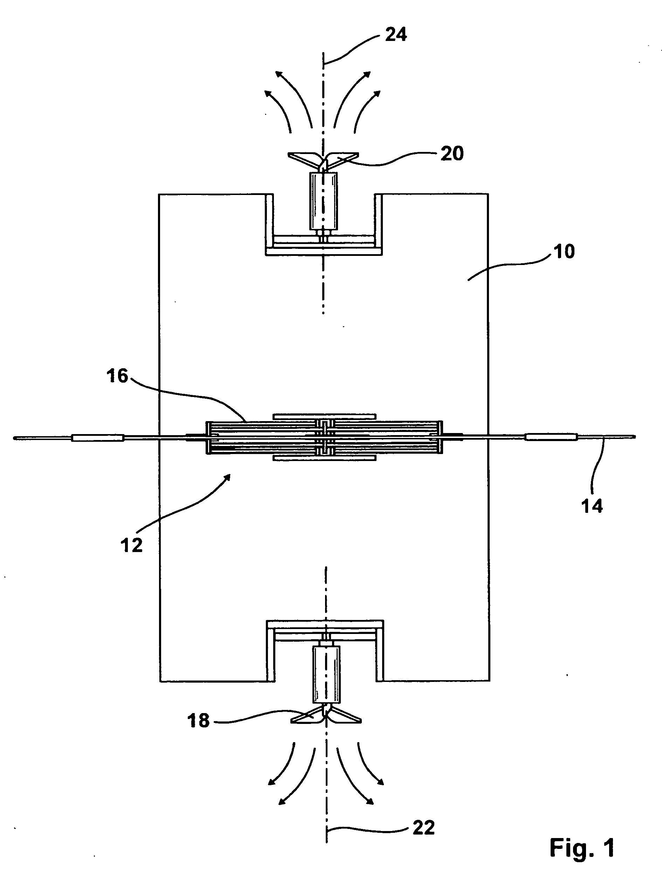

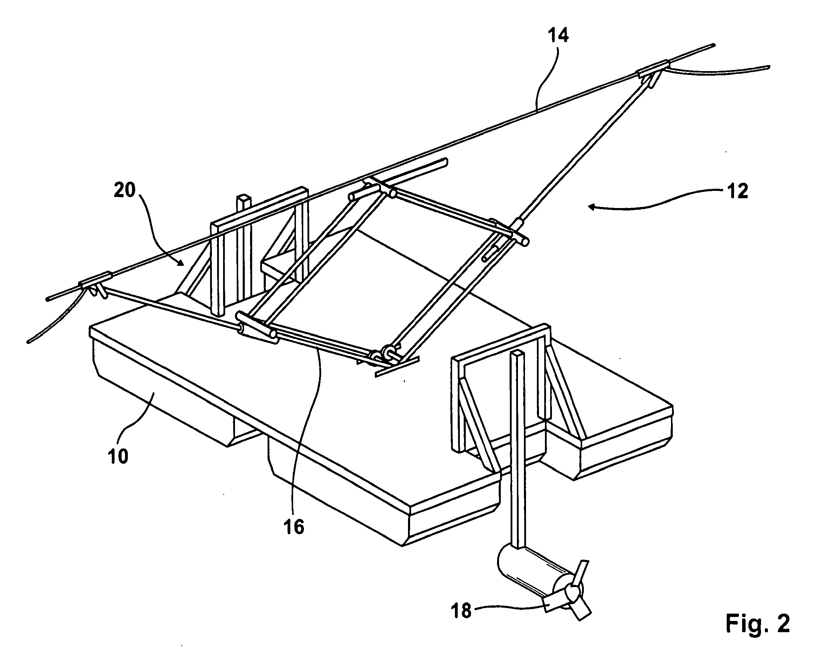

Die in den Fig. 1 und 2 dargestellte Vorrichtung zum Homogenisieren von in einer Güllegrube befindlicher Gülle umfasst einen auf der Gülle frei schwimmenden Ponton 10, der über eine Führung 12 vor und zurück bewegbar ist. Zu der Führung 12 gehört ein Drahtseil 14, welches am Beckenrand gehalten ist. Ferner umfasst die Führung 12 ein Scherengestänge 16, um die Höhendifferenz zwischen dem Drahtseil 14 und dem Ponton 10 auch bei unterschiedlichen Füllständen innerhalb des Güllebeckens zu kompensieren. Das Drahtseil 14 ist am jeweiligen Ende auf je einer hier nicht dargestellten Wickelrolle aufgewickelt, wobei zum Bewegen des Pontons 10 eine Rolle das Drahtseil 14 aufwickelt, während die andere Rolle entsprechendes Drahtseil 14 abwickelt.

Am Ponton 10 ist ein Rührwerk mit zwei Rührschrauben 18, 20 derart angebracht, dass die Rührschrauben 18, 20 vollständig in die Gülle eintauchen. Dabei rotieren die Rührschrauben 18, 20 um jeweils eine Rotationsachse 22, 24, wobei die Rotationsachsen 22, 24 miteinander fluchtend angeordnet sind und orthogonal zur Bewegungsrichtung des Pontons 10 ausgerichtet sind. Des Weiteren sind die Rotationsachsen 22, 24 im Wesentlichen horizontal ausgeführt.

Die Rührschrauben 18, 20 sind gegenläufig angeordnet, so dass die von der Rührschraube 18 bewegte Gülle in eine entgegengesetzte Richtung gefördert wird, wie die von der Rührschraube 20 bewegte Gülle.

In einer anderen, hier nicht dargestellten Ausführungsform wird das Ponton über einen auf dem Ponton installierten Antrieb bewegt. Dieser elektrische Antrieb treibt ein oder mehrere Reibräder an, die auf das Führungsseil wirken und das Ponton entlang des Führungsseils hin und her bewegen.

In einer anderen, hier nicht dargestellten Ausführungsform sind die Rührwerke höhenverstellbar, so dass die Rührschrauben 18, 20 unterschiedlich tief in die Gülle eintauchen und damit die Gülle auf unterschiedlichsten Niveaus homogenisieren.

In noch einer anderen, hier nicht dargestellten Ausführungsform sind die Rührschrauben um eine Hochachse um bis zu15°, vorzugsweise 10°, verschwenkbar. Hierdurch wird auf das Ponton eine Kraft ausgeübt, die die gesamte Vorrichtung fortbewegt. Dabei ist der Vortrieb um so schneller, je größer der Anstellwinkel ist.

Zum Homogenisieren von Gülle in einer Güllegrube wird der Ponton 10 über einen Scherengestänge 16 an einem Drahtseil 14 angebracht, welches am Rand der Güllegrube ortsfest befestigt ist. Die elektrisch betriebenen Rührschrauben 18, 20 sind dabei so angeordnet, dass die Gülle orthogonal zur Bewegungsrichtung des Pontons 10 transportiert wird. Beim Fortbewegen des Pontons 10 wird hierbei ein sehr großer Teil des Güllebeckens von den Rührschrauben 18, 20 erfasst, was zu einer großen Homogenisierung der Gülle führt.

### Bezugszeichenliste:

- 10: Ponton
- 12: Führung
- 14: Drahtseil
- 16: Scherengestänge
- 18: Rührschraube
- 20: Rührschraube
- 22: Rotationsachse
- 24: Rotationsachse

## Patentansprüche

1. Vorrichtung zum Homogenisieren von in einer Güllegrube befindlicher Gülle, mit einem in oder auf der Gülle schwimmenden Ponton (10) und mit einem am Ponton (10) gehaltenen, in die Gülle eintauchenden Rührwerk,
**dadurch gekennzeichnet,**
**dass** das Rührwerk zwei um je eine Rotationsachse (18, 20) rotierende Rührschrauben (18, 20) umfasst und dass die Rührschrauben (18, 20) derart ausgerichtet sind, dass die jeweiligen Rotationsachsen (22, 24) im Wesentlichen orthogonal zur Bewegungsrichtung des Pontons (10) angeordnet sind.

2. Vorrichtung nach Anspruch 1,
**dadurch gekennzeichnet,**
**dass** die Rührschrauben (18, 20) gegenläufig angeordnet sind.

3. Vorrichtung nach wenigstens einem der vorangehenden Ansprüche,
**dadurch gekennzeichnet,**
**dass** die Rotationsachsen (22, 24) in Wesentlichen horizontal ausgerichtet sind.

4. Vorrichtung nach wenigstens einem der vorangehenden Ansprüche,
**dadurch gekennzeichnet,**
**dass** die Rührschrauben (18, 20) höhenverstellbar sind.

5. Vorrichtung nach wenigstens einem der vorangehenden Ansprüche,
**dadurch gekennzeichnet,**
**dass** die Rotationsachsen (22, 24) der Rührschrauben (18, 20) des Rührwerks miteinander fluchten.

6. Vorrichtung nach wenigstens einem der vorangehenden Ansprüche,
**dadurch gekennzeichnet,**
**dass** der Ponton (10) über eine Führung (12) in seiner Bewegungsrichtung geführt ist.

7. Vorrichtung nach Anspruch 6,
**dadurch gekennzeichnet,**
**dass** die Führung (12) ein ortsfest verankertes Drahtseil (14) umfasst.

8. Vorrichtung nach einem der Ansprüche 6 oder 7,
**dadurch gekennzeichnet,**
**dass** die Führung (12) synchronisierte Antriebswinden umfasst, wobei eine Antriebswinde den Ponton (10) zieht, während die andere Antriebswinde abrollt und umgekehrt.

9. Vorrichtung nach einem der vorangehenden Ansprüche,
**dadurch gekennzeichnet,**
**dass** mindestens eine Rührschraube (18, 20) um eine Hochachse schwenkbar ist.

10. Verfahren zum Homogenisieren von in einer Güllegrube befindlicher Gülle, unter Verwendung einer Vorrichtung gemäß einem der Ansprüche 1 bis 9,
**dadurch gekennzeichnet,**
**dass** die Rührschrauben (18, 20) orthogonal zu ihrer Rotationsachse (22, 24) durch die Gülle bewegt werden.

## Claims

1. A device for homogenizing liquid manure in a cesspool, said device comprising a pontoon (10) floating in or on the liquid manure and a stirring unit held on the pontoon (10) and immersed in the liquid manure,
**characterized in that,**
the stirring unit comprises two stirring screws (18, 20) rotating around respectively one rotational axis (18, 20) and that the stirring screws (18, 20) are oriented in such a manner that the respective rotational axes (22, 24) are substantially disposed orthogonally to the direction of motion of the pontoon (10).

2. The device according to claim 1,
**characterized in that,**
the stirring screws (18, 20) are disposed in opposite directions.

3. The device according to at least one of the afore-mentioned claims,
**characterized in that,**
the rotational axes (22, 24) are substantially oriented horizontally.

4. The device according to at least one of the afore-mentioned claims,
**characterized in that,**
the stirring screws (18, 20) are adjustable in height.

5. The device according to at least one of the afore-mentioned claims,
**characterized in that,**
the rotational axes (22, 24) of the stirring screws (18, 20) of the stirring unit are aligned with each other.

6. The device according to at least one of the afore-mentioned claims,
**characterized in that,**
the pontoon (10) is guided in its direction of motion by way of a guide (12).

7. The device according to claim 6,
**characterized in that,**
the guide (12) comprises a steel cable (14), which is anchored in a fixed place.

8. The device according to one of the claims 6 or 7,
**characterized in that,**
the guide (12) comprises synchronized driving winches, one driving winch pulling the pontoon (10), while the other driving winch unrolls and vice versa.

9. The device according to one of the afore-mentioned claims,
**characterized in that,**
at least one stirring screw (18, 20) is rotatable around a vertical axis.

10. A method for homogenizing liquid manure in a cesspool by a device according to one of the claims 1 to 9,
**characterized in that,**
the stirring screws (18, 20) are moved through the liquid manure orthogonally to their rotational axis (22, 24).

## Revendications

1. Dispositif pour homogénéiser du lisier se trouvant dans une fosse à lisier, avec un ponton (10) flottant dans ou sur le purin et avec un agitateur maintenu sur le ponton (10) et plongeant dans le purin,
**caractérisé en ce que**
l'agitateur comporte deux hélices d'agitation (18, 20) en rotation autour de respectivement un axe de rotation (18, 20) et que les hélices d'agitation (18, 20) sont orientées de telle manière que les axes de rotation respectifs (22, 24) sont disposés de manière essentiellement orthogonale à la direction de mouvement du ponton (10).

2. Dispositif selon la revendication 1,
**caractérisé en ce que**
les hélices d'agitation (18, 20) sont disposées en opposition.

3. Dispositif selon au moins l'une quelconque des revendications précédentes,
**caractérisé en ce que**
les axes de rotation (22, 24) sont orientés de manière essentiellement horizontale.

4. Dispositif selon au moins l'une quelconque des revendications précédentes,
**caractérisé en ce que**
les hélices d'agitation (18, 20) sont ajustables en hauteur.

5. Dispositif selon au moins l'une quelconque des revendications précédentes,
**caractérisé en ce que**
les axes de rotation (22, 24) des hélices d'agitation (18, 20) de l'agitateur sont alignés.

6. Dispositif selon au moins l'une quelconque des revendications précédentes,
**caractérisé en ce que**
le ponton (10) est guidé dans sa direction de mouvement par un guidage (12).

7. Dispositif selon la revendication 6,
**caractérisé en ce que**
le guidage (12) comporte un câble d'acier (14) ancré de manière fixe.

8. Dispositif selon l'une des revendications 6 ou 7,
**caractérisé en ce que**
le guidage (12) comporte des treuils d'entraînement synchronisés, un treuil d'entraînement tirant le ponton (10) pendant que l'autre treuil d'entraînement se déroule et vice versa.

9. Dispositif selon l'une quelconque des revendications précédentes,
**caractérisé en ce qu'**
au moins une hélice d'agitation (18, 20) est apte à être pivotée autour d'un axe vertical.

10. Méthode pour homogénéiser du lisier se trouvant dans une fosse à lisier en utilisant un dispositif selon l'une des revendications 1 à 9,
**caractérisée en ce que**
les hélices d'agitation (18, 20) sont déplacées dans le purin de manière orthogonale à leur axe de rotation (22, 24).
